# EUROPEAN PATENT SPECIFICATION

(11) **EP 4 024 050 B1**
(45) Date of publication and mention of the grant of the patent: **25.06.2025**
(21) Application number: 20858485.4
(22) Date of filing: 20.02.2020
(51) Int. Cl.: G01N 35/00

(54) **AUTOMATED ANALYZER**
AUTOMATISIERTER ANALYSATOR
ANALYSEUR AUTOMATISÉ

(30) Priority: 27.08.2019 JP 2019154516
(43) Date of publication of application: 06.07.2022
(73) Proprietor: Hitachi High-Tech Corporation, Minato-ku Tokyo 105-6409 (JP)
(72) Inventor: SAKAMOTO, Katsuhiko, Tokyo 105-6409 (JP); SASAKI, Shunsuke, Tokyo 105-6409 (JP); YAMANO, Teruhiro, Tokyo 105-6409 (JP); SAKAZUME, Taku, Tokyo 105-6409 (JP)
(74) Representative: MERH-IP Matias Erny Reichl Hoffmann Patentanwälte PartG mbB
(86) International application number: PCT/JP2020/006871
(87) International publication number: WO 2021/038918

(56) References cited:
- WO-A1-2014/119399
- WO-A1-2014/119399
- CN-U- 204 938 999
- JP-A- 2011 117 815
- JP-A- 2011 117 815
- JP-A- 2017 523 434
- US-A1- 2016 354 783

## Description

### Technical Field

The present disclosure relates to an automatic analyzer.

### Background Art

An automatic analyzer that performs qualitative and quantitative analysis of biological samples such as blood discharges a waste liquid in a case of performing an analysis operation. Since the waste liquid may contain infectious substances, in many cases, it is necessary to hold the waste liquid in a waste liquid tank, sterilize the waste liquid with a sterilizing agent, and then discard the waste liquid.

In a case where the waste liquid tank is full and is to be replaced by another waste liquid tank, it is necessary to stop the operation of the automatic analyzer during the replacement to prevent discharge of the waste liquid. When a process is interrupted during an analysis of a specimen, loss of the specimen may occur.

Since the automatic analyzer is required to exhibit high processing performance and achieve quick output of measurement results, a technique is disclosed in which the automatic analyzer is not stopped as much as possible in order to quickly output the measurement result (PTL 1).
PTL 2 relates to a sample processing method comprising the steps of drawing a plurality of samples from a plurality of sample containers; dispensing each sample into a well of a sample processing plate comprising a plurality of wells, wherein each sample is dispensed into a different well; dispensing fluids into the plurality of wells of the sample processing plate using a contactless fluid dispensing device; detecting the liquid level in each of the plurality of wells of the sample processing plate using a plurality of contactless liquid level sensors; mixing at least one sample processing plate simultaneously using a plurality of contactless mixing devices; removing fluids from the plurality of wells of the sample processing plate using a plurality of aspirators; and managing fluids removed from the plurality of wells using a waste management system.
PTL 3 relates to an automatic analyzer comprising an analyzing unit to analyze a specimen, a waste liquid tank to hold waste liquid discharged from the analyzing unit, a waste liquid buffer tank to hold waste liquid in pipes connected to the waste liquid tank, and a valve to block and release the discharge of waste liquid that is discharged from the waste liquid buffer tank to the waste liquid tank.
PTL 4 relates to a liquid chromatograph apparatus configured to detect an amount of liquids in containers by providing a plurality of RFID tags for the reagent container and the waste liquid container; to predict the total amount of reagents used and the amount of occurrence of a waste liquid on the basis of the number of specimens to be analyzed and the amount of regents used for each specimen; to make a display device display a shortage message that a reagent of the reagent container is short; and to make the display device display an overflow message when the waste liquid container will overflow.

### Citation list

### Patent Literature

PTL 1: JP-A-2016-095133
PTL 2: US 2016/354783 A1
PTL 3: WO 2014/119399 A1
PTL 4: JP 2011 1178 15 A

### Summary of Invention

### Technical Problem

However, in PTL 1, no study has been made on the sterilization of the waste liquid, and it is necessary for a user to manually add the sterilizing agent to the waste liquid tank each time the waste liquid is to be discarded. Therefore, an operation of the user is complicated, and feeding of the sterilizing agent may also fail.

In a case where the waste liquid tank is full, it is necessary for the user to collect the waste liquid from the waste liquid tank and discard the waste liquid before the tank in which the waste liquid is to be temporarily discharged is full, which may be a burden on the user because the user is required to take an immediate action.

Therefore, the present disclosure provides a technique for securely sterilizing and then discarding a waste liquid in a waste liquid tank without interrupting the operation, so as to reduce the burden on a user in discarding the waste liquid.

### Solution to Problem

The aforementioned object is solved by the invention according to the independent claim 1. Further preferred developments are described by the dependent claims. In particular, an automatic analyzer according to the present disclosure includes inter alia: a measuring unit configured to perform a measurement on a specimen; a first waste liquid tank configured to accommodate a waste liquid discharged via a first flow path from the measuring unit; a second waste liquid tank configured to accommodate a waste liquid discharged via a second flow path from the measuring unit; an electromagnetic valve disposed between the first flow path and the second flow path, and configured to switch the flow paths so as to discharge the waste liquid to any one of the first waste liquid tank and the second waste liquid tank; a first feed unit configured to feed a sterilizing agent into the first waste liquid tank; and a control unit configured to control at least the electromagnetic valve and the first feed unit, wherein the control unit is configured to drive the first feed unit to feed the sterilizing agent into the first waste liquid tank when the waste -liquid in the first waste liquid tank reaches a first prescribed amount, and drive the electromagnetic valve to switch the first flow path into a closed state and to switch the second flow path into an open state.

Further features relevant to the present disclosure will become apparent from the descriptions and the accompanying drawings of the present disclosure. Aspects of the present disclosure may be achieved and implemented by means of the elements and combinations of various elements and the following detailed description and accompanying claims.

The descriptions in this specification are merely exemplary, and are not intended to limit the scope of the claims or application in any way whatsoever.

### Advantageous Effect

According to the automatic analyzer of the present disclosure, it is possible to securely sterilize and then discard the waste liquid in the waste liquid tank without interrupting the operation, and the burden on the user is reduced in discarding the waste liquid. Problems, configurations, and effects other than those described above will be clarified by the following description of embodiments.

### Brief Description of Drawings

FIG. 1 is a schematic view showing a configuration of an overall system including a core device and an automatic analyzer according to a first embodiment.
FIG. 2 is a schematic view showing a configuration of a waste liquid system according to the first embodiment.
FIG. 3 is a flow chart showing a waste liquid discarding method according to the first embodiment.
FIG. 4 is a schematic view showing a configuration of a waste liquid system according to a second embodiment.
FIG. 5 is a flow chart showing a waste liquid discarding method according to the second embodiment.
FIG. 6 is a flow chart showing a waste liquid discarding method according to a third embodiment.
FIG. 7 is a schematic view showing an example of a screen displaying a limit time.
FIG. 8 is a schematic view showing a configuration of a waste liquid system according to a fourth embodiment.
FIG. 9 is a flow chart showing a waste liquid discarding method according to the fourth embodiment.

### Description of Embodiments

### [First Embodiment]

### <Configuration of Automatic analyzer>

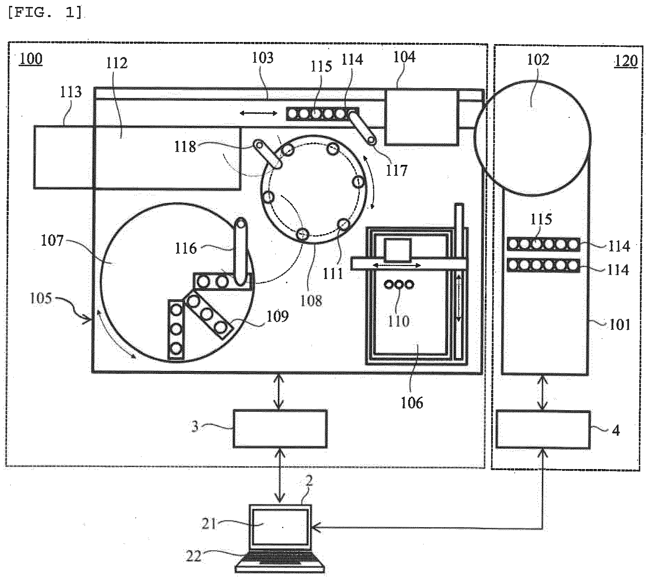

FIG. 1 is a schematic view showing a configuration of an overall system including a core device 120 and an automatic analyzer 100 according to the first embodiment. FIG. 1 shows a top view of main parts of the automatic analyzer 100 and the core device 120, and a schematic view of computers 2 to 4. The automatic analyzer 100 includes a conveyance line 103, a buffer 104, an analysis unit 105, and the computer 3. The core device 120 includes a specimen rack feed unit 101, a specimen rack recovery unit 102, and the computer 4.

The specimen rack feed unit 101 is a part where a specimen rack 114 is to be fed, and the sample rack 114 holds a .plurality of specimen vessels 115 each accommodating a specimen (sample).

The conveyance line 103 is disposed along the analysis unit 105, and conveys the specimen rack 114 from the specimen rack feed unit 101 to the analysis unit 105. The conveyance line 103 conveys the specimen rack 114 holding the specimen that has been analyzed by the analysis unit 105 so as to be accommodated in the specimen rack recovery unit 102.

The buffer 104 is disposed on the conveyance line 103 and temporarily stores any specimen rack 114 conveyed by the conveyance line 103. The number of specimen racks 114 stored in the buffer 104 may be one or plural. One or a plurality of specimen tanks 114 may be stored in the buffer 104. The buffer 104 is capable of supplying the specimen rack 114 again to the analysis unit 105 or the specimen rack recovery unit 102 at any timing.

The analysis unit 105 analyzes the specimen conveyed by the conveyance line 103. As shown in FIG. 1, the analysis unit 105 includes a reaction vessel accommodation unit 106, a reagent disk 107, a reaction disk (incubator) 108, a measuring unit 112, a waste liquid system 113, a reagent dispensing probe 116, a specimen dispensing probe 117, and a reaction liquid dispensing probe 118.

The reaction vessel accommodation unit 106 is configured to accommodate and convey reaction vessels 110, and the reaction vessels 110 are disposed in respective reaction vessel holding units 111 of the reaction disk 108.

The reagent disk 107 holds reagent vessels 109 each accommodating a reagent. The reagent is dispensed by the reagent dispensing probe 116 into the reaction vessel 110 held on the reaction disk 108.

The specimen conveyed by the conveyance line 103 is dispensed by the specimen dispensing probe 117 into the reaction vessel 110 held on the reaction disk 108. In this way, by dispensing and mixing the specimen and the reagent in the reaction vessel 110 to cause a reaction therebetween, it is possible to obtain a reaction liquid. The reaction liquid obtained as described above can be dispensed to the measuring unit 112 by the reaction liquid dispensing probe 118. Although not shown in the drawings, the measuring unit 112 includes a cell or a vessel for the reaction liquid dispensing probe 118 to dispense the reaction liquid. Depending on a type of measurement, the specimen on the conveyance line 103 may be directly, dispensed to the measuring unit 112 with the reaction liquid dispensing probe 118. Hereinafter, to simplify the description, the reaction liquid of the specimen and the reagent may also be referred to as "specimen".

The measuring unit 112 measures, for example, optical characteristics of the specimen. In this case, the measuring unit 112 includes a light source that emits light to a cell accommodating the specimen; and a photodetector that detects transmitted light or scattered light from the cell. The measuring unit 112 may be, for example, an electrolyte measuring unit for measuring an electrolyte concentration in the specimen. In this case, the measuring unit 112 includes an ion-selective electrode and a reference electrode, and directly introduces the specimen, or dilutes and then introduces the specimen into the ion-selective electrode to measure an ion concentration.

A plurality of analysis units 105 may be provided, and the analysis units 105 can be configured to measure characteristics of different specimens.

The waste liquid system 113 holds a waste liquid discharged from the automatic analyzer 100, particularly from the analysis unit 105. In a case where a plurality of analysis units 105 are provided, each analysis unit 105 is provided with one waste liquid system 113. The details of the waste liquid system 113 will be described later.

The computer 3 is connected to the analysis unit 105 and controls an action of each component of the analysis unit 105. The computer 4 is connected to the specimen rack feed unit 101, the specimen rack recovery unit 102, the conveyance line 103, and the buffer 104, and controls actions thereof. In FIG. 1, the computer 3 is disposed outside the housing of the analysis unit 105, and the computer 4 is disposed outside the specimen rack feed unit 101, but the present disclosure is not limited thereto, and the computers 3 and 4 may be disposed inside the housing of the automatic analyzer 100. In this case, for example, a control board or the like can be used as the computers 3 and 4.

The computer 2 is connected to the computers 3 and 4 and controls the overall system. The computer 2 is, for example, a computer terminal such as a general-purpose computer, a smartphone, a tablet, or a mobile phone, and includes a display unit 21 and an input unit 22. The display unit 21 displays, for example, a GUI screen, or data such as measurement results obtained by the analysis unit 105. The input unit 22 is an input device such as a keyboard or a mouse, and the user can input instructions or information to the computer 2 by operating the input unit 22. A touch panel may be used as the display unit 21, and may also serve as the input unit 22. Although not shown in the drawings, the computers 2 to 4 include a storage unit that stores various data such as the measurement results.

### <Configuration of Waste Liquid System>

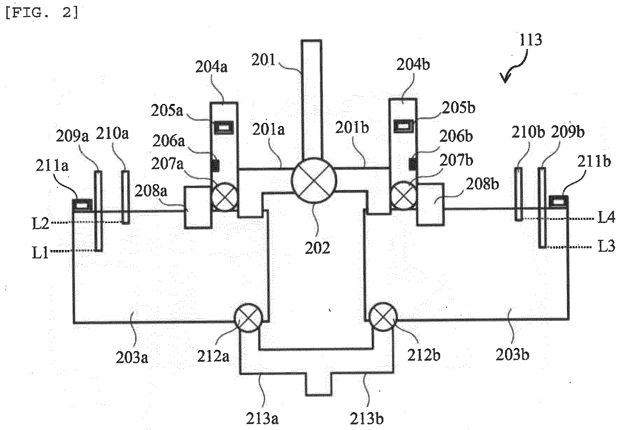

FIG. 2 is a schematic view showing a configuration of a waste liquid system 113 according to the first embodiment. As shown in FIG. 2, the waste liquid system 113 includes a piping 201, an electromagnetic valve 202, a waste liquid tank 203a (first waste liquid tank), a waste liquid tank 203b (second waste liquid tank), feeding standby units 204a and 204b, LEDs 205a and 205b, sensors 206a and 206b, electromagnetic valves 207a and 207b, feed units 208a and 208b, a warning water level sensor 209a (first detection unit), a warning water level sensor 209b (second detection unit), limiting water level sensors 210a and 210b, LEDs 211a and 211b, electromagnetic valves 212a and 212b, and facility piping 213a and 213b. The computer 3 drives the components of the waste liquid system 113, receives output signals of the above-described sensors, and transmits the signals to the computer 2 as needed.

The piping 201 is a piping for discharging the waste liquid discharged from the automatic analyzer 100 to the waste liquid tank 203a or the waste liquid tank 203b, and a flow path branches into flow paths 201a and 201b (first flow path and second flow path) with the electromagnetic valve 202 as a boundary. It is possible to switch between the waste liquid tanks 203a and 203b by operating the electromagnetic valve 202. The waste liquid discharged from the automatic analyzer 100 passes through the piping 201 and is first discharged to, for example, the waste liquid tank 203a (first waste liquid tank).

The waste liquid tanks 203a and 203b are configured to be removable from the waste liquid system 113. The waste liquidtanks 203a and 203b are formed in the same shape and size in the. example shown in FIG. 2, but the shapes and sizes may also be different.

The feeding standby unit 204a (sterilizing agent holding unit) is formed, in a tubular shape, for example, and accommodates a sterilizing agent therein. As the sterilizing agent, well-known substances such as sodium dichloroisocyanurate or a hydrate thereof, sodium trichloroisocyanurate and the like can be used. A form of the sterilizing agent is not particularly limited, and may be, for example, in a form of a tablet.

The sensor 206a detects the presence or absence of the sterilizing agent in the feeding standby unit 204a. The LED 205a is lit based on an output signal of the sensor 206a, for example, when the sterilizing agent is present.

When the sensor 206a detects that the sterilizing agent is not present in the feeding standby unit 204a, the computer 3 displays a warning on the display unit 21 of the computer 2 and prompts a user to introduce the sterilizing agent into the feeding standby unit 204a. Instead of detecting the presence or absence of the sterilizing agent, the sensor 206a may be configured to detect, for example, that an amount of the sterilizing agent is less than a prescribed amount.

By driving the electromagnetic valve 207a (first feed unit), a movement of the sterilizing agent from the feeding standby unit 204a to the feed unit 208a (first feed unit) is controlled. The feed unit 208a is configured to feed the sterilizing agent into the waste liquid tank 203a.

The warning water level sensor 209a includes a liquid level detection unit (not shown) disposed at a warning water level L1 and detects whether or not a waste liquid in the waste liquid tank 203a reaches the warning water level L1 (first prescribed amount) . The limiting water level sensor 210a includes a liquid level detection unit (not shown) disposed at a limiting water level L2, and detects whether or not the waste liquid in the waste liquid tank 203a reaches the limiting water level L2. In the specification, the warning water level L1 is a water level at which the waste liquid in the waste liquid tank 203a is to be discarded, and is set at a position lower than the limiting water level L2. The limiting water level L2 indicates a maximum amount of waste liquid that can be accommodated in the waste liquid tank 203a, that is, a capacity of the waste liquid tank 203a, and is set at a position lower than an upper surface of the waste liquid tank 203a.

In a case where the limiting water level sensor 210a detects the liquid level, it is determined that the waste liquid in the waste liquid tank 203a reaches the limiting water level L2, and there is an abnormality such as a very large amount of waste liquid is suddenly discharged for some reason or the waste liquid in the waste liquid tank 203a is not discarded, and the operation of the automatic analyzer 100 is stopped. Thus, safety can be ensured by urgently stopping the operation when an abnormality occurs.

The electromagnetic valve 212a (first discarding unit) is provided at a bottom of the waste liquid tank 203a and is connected to the facility piping 213a (first discarding unit). By setting the electromagnetic valve 212a into an open state, the waste liquid in the waste liquid tank 203a is discarded from the facility piping 213a. As will be described later, the computer 3 has a timer function and measures an elapsed time from a time when the sterilizing agent is fed with the feed unit 208a. When a prescribed time (first prescribed time) up to when the sterilizing agent dissolves in the waste liquid is elapsed, the computer 3 sets the electromagnetic valve 212a into an open state and discards the waste liquid in the waste liquid tank 203a from the facility piping 213a (first discarding unit). After the sterilizing agent is fed into the waste liquid tank 203a, the electromagnetic valve 202 is driven to switch the waste liquid tank, and the waste liquid is discharged to the waste liquid tank 203b (second waste liquid tank).

The components on the waste liquid tank 203b side are the same as the components on the waste liquid tank 203a side. That is, when it is detected that the waste liquid in the waste liquid tank 203b reaches a warning water level L3 (second prescribed amount), the sterilizing agent is fed, and when a prescribed time (second prescribed time) up to when the sterilizing agent dissolves in the waste liquidis elapsed, the electromagnetic valve 212b (second discarding unit) is set into an open state, and the waste liquid in the waste liquid tank 203b is discarded from the facility piping 213b (second discarding unit).

In a case where the waste liquid tanks 203a and 203b are formed in the same shape and size, the warning water level L1 and the warning water level L3 are set to the same water level, and.the first prescribed time and the second prescribed time are also set to be the same. The same also applies to the limiting water level L2 of the waste liquid tank 203a and a limiting water level L4 of the waste liquid tank 203b.

The LED 211a is lit when the waste liquid tank 203a is in use and the LED 211b is lit when the waste liquid tank 203b is in use. Thus, the user can determine at a glance which of the waste liquid tanks 203a and 203b the waste liquid is discharged to.

### <Waste Liquid Discarding Method>

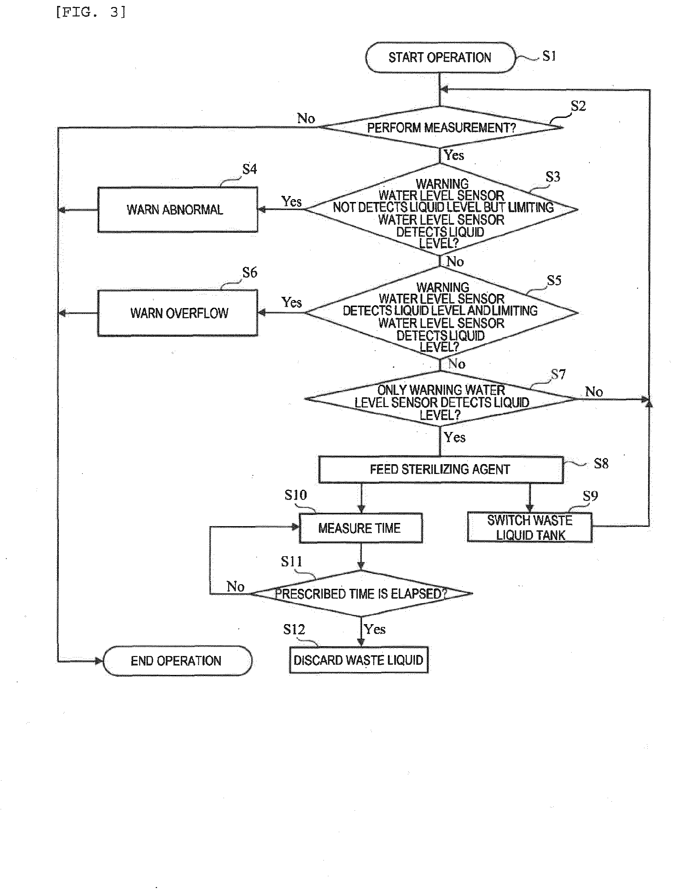

FIG. 3 is a flow chart showing a waste liquid discarding method performed by the automatic analyzer 100 according to the present embodiment. Although this discarding method is actually performed by the computers 2 to 4 controlling the components of the automatic analyzer 100, each of these components may be described as a main body of an action. Hereinafter, an example of using the waste liquid tank 203a will be described first.

First, the user introduces the sterilizing agent into the feeding standby units 204a and 204b in advance.

In step S1, the user inputs an action start instruction with the input unit 22 to the computer 2. When receiving the action start instruction from the input unit 22, the computer 2 transmits the instruction to the computers 3 and 4. The computer 3 starts accepting inputs of detection signals of the sensors 206a and 206b, detection signals of the warning water level sensors 209a and 209b, and detection signals of the limiting water level sensors 210a and 210b.

In step S2, the computer 3 determines whether or not a measurement is performed in the measuring unit 112. In this step, for example, whether or not the measurement is performed can be determined by comparing the number of specimens that is set in advance with the number of specimens that has already been measured. When it is determined in step S2 that the measurement is not performed, the operation ends. When it is determined that the measurement is performed, the process proceeds to step S3.

In step S3, the computer 3 determines whether or not the warning water level sensor 209a does not detect the liquid level and the limiting water level sensor 210a detected the liquid level.

In a case of Yes in step S3, since only the limiting water level sensor 210a located on an upper side detects the liquid level, the warning water level sensor 209a, the limiting water level sensor 210a, or other components may have an abnormality. Therefore, in step S4, the computer 3 transmits the determination result indicating that there is an abnormality to the computer 2. The computer 2 displays a warning indicating that there is an abnormality in the display unit 21 and ends the operation.

In a case of No in step S3, the process proceeds to step S5. In step S5, the computer 3 determines whether or not the warning water level sensor 209a detects the liquid level and the limiting water level sensor 210a detects the liquid level.

In a case of Yes in step S5, since the warning water level sensor 209a and the limiting water level sensor 210a both detect the liquid level, the waste liquid reaches the limiting water level L2. Therefore, the process proceeds to step S6, and the computer 3 transmits a determination result indicating that overflow occurs to the computer 2. The computer 2 displays a warning that the overflow occurs on the display unit 21 and ends the operation. As described above, steps S3 and S5 are executed to confirm whether or not any abnormality occurs.

In a case of No in step S5, the process proceeds to step S7. In step S7, the computer 3 determines whether or not only the warning water level sensor 209a detects the liquid level.

In a case of Yes in step S7, the waste liquid reaches the warning water level L1. Therefore, in step S8, the computer 3 drives the electromagnetic valve 207a and the feed unit 208a to feed the sterilizing agent into the waste liquid tank 203a.

In a case of No in step S7, since the waste liquid can still be discharged to the waste liquid tank 203a, the process returns to step S2 and the measurement is continued.

After step S8, in step S9, the computer 3 drives the electromagnetic valve 202 such that the flow path 201a is set to a closed state and the flow path 201b is set to an open state. Thus, the waste liquid tank is switched, and the waste liquid is discharged to the waste liquid tank 203b. Actions after step S9 are the same as the actions of steps S2 to S8, except that the components on the waste liquid tank 203b side are used.

Further, at the same time as step S9, in step S10, the computer 3 measures a time since the sterilizing agent is fed into the waste liquid tank 203a.

In step S11, the computer 3 determines whether or not the prescribed time (first prescribed time) up to when the sterilizing agent dissolves in the waste liquid is elapsed. In a case where the prescribed time is elapsed (Yes), it can be said that the waste liquid in which the sterilizing agent dissolves is sufficiently sterilized, and thus in step S12, the computer 3 opens the electromagnetic valve 212a and discards the waste liquid via the facility piping 213a. In a case where the prescribed time is not elapsed (No), the process returns to step S10 and the measurement of time is continued.

### <Technical Effects>

As described above, when the waste liquid reaches the warning water level in the first waste liquid tank (waste liquid tank 203a), the automatic analyzer 100 according to the present embodiment switches the waste liquid tank to the second waste liquid tank (waste liquid tank 203b) and continues the measurement, while automatically feeding the sterilizing agent to the first waste liquid tank, and discarding the waste liquid when the sterilization is completed. Thus, since the sterilized waste liquid can be discarded without stopping the operation, loss of the specimen during the measurement does not occur. It is not necessary for the user to feed the sterilizing agent and collect the waste liquid, so that the burden on the user can be reduced.

### [Second Embodiment]

In the first embodiment, an example has been described in which the waste liquid system 113 includes the electromagnetic valves 212a and 212b for discharging the waste liquid from the waste liquid tanks 203a and 203b, and the facility piping 213a and 213b, and the waste liquid is automatically discharged from each waste liquid tank. However, the electromagnetic valves 212a and 212b and the facility piping 213a and 213b do not necessarily have to be provided, and the waste liquid may be discarded by the user from the waste liquid tanks 203a and 203b. Thus, in a second embodiment, an example will be described in which the user manually-discards the waste liquid.

### <Configuration of Waste Liquid System>

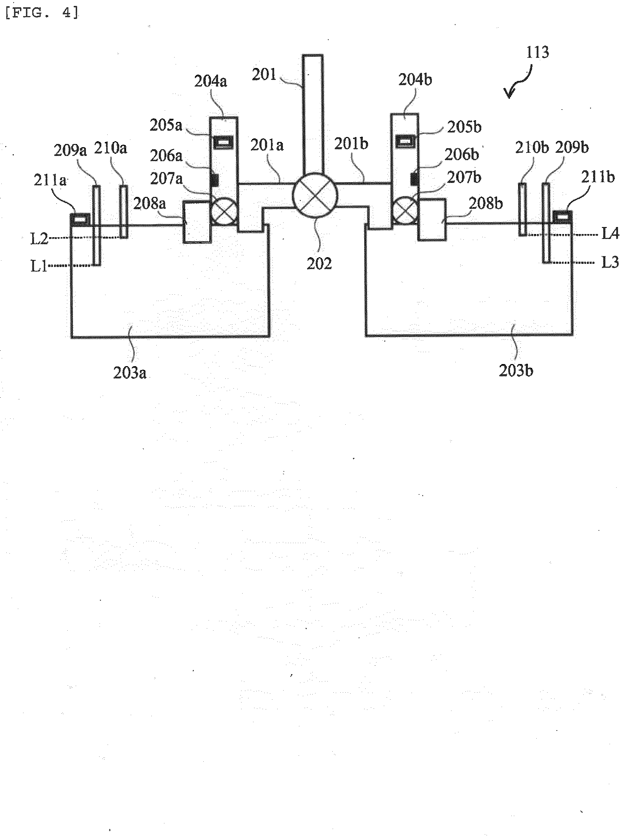

FIG. 4 is a schematic view showing a configuration of the waste liquid system 113 according to the second embodiment. In FIG. 4, the same configurations as those in FIG. 2 are designated by the same reference numerals. As shown in FIG. 4, the waste liquid system 113 according to the present embodiment is the same as the waste liquid system 113 according to the first embodiment except that the waste liquid system 113 according to the present embodiment does not include the electromagnetic valves 212a and 212b and the facility piping 213a and 213b.

### <Waste Liquid Discarding Method>

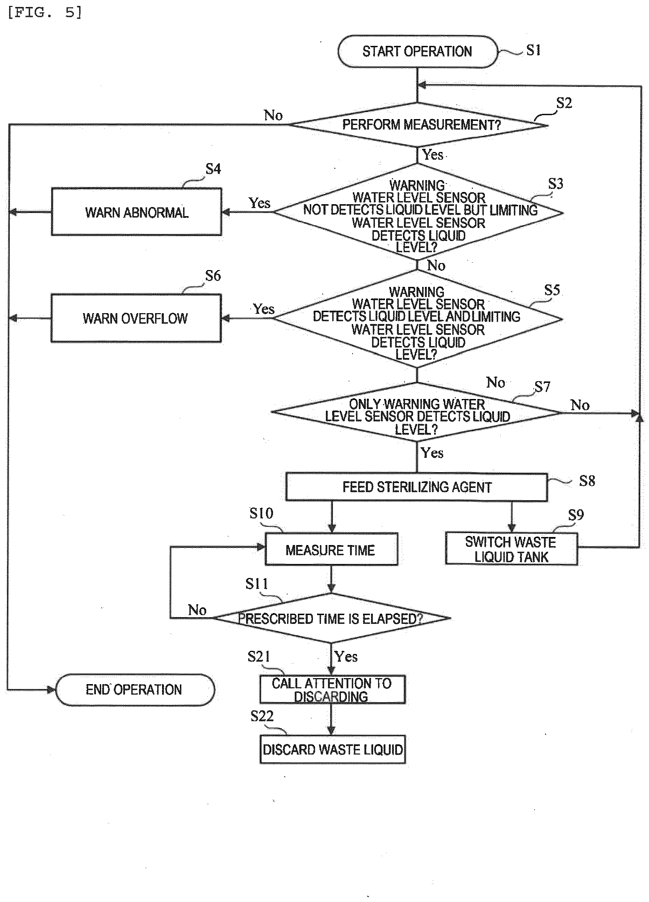

FIG. 5 is a flow chart showing a waste liquid discarding method according to the second embodiment. In the waste liquid discarding method according to the present embodiment, actions of steps S1 to S11 are the same as those in the first embodiment, and thus description thereof is omitted.

In a case of Yes in step S11, in step S21, the computer 3 outputs to the computer 2 information that sterilization of the waste liquid tank 203a is completed and the waste liquid can be discarded. The computer 2 displays a notification on the display unit 21 (warning unit) in order to prompt a user to discard the waste liquid in the waste liquid tank 203a. Instead of displaying the notification on the display unit 21 or at the same time as the display on the display unit 21, the computer 2 may prompt the user to discard the waste liquid by emitting a sound or light.

In step S22, the user removes the waste liquid tank 203a, discards the waste liquid, and re-installs the waste liquid tank 203a.

### <Technical Effects>

As described above, as well in the second embodiment, when the waste liquid reaches the warning water level in the first waste liquid tank (waste liquid tank 203a), the automatic analyzer 100 switches the waste liquid tank to the second waste liquid tank (waste liquid tank 203b) and continues the measurement, while automatically feeding the sterilizing agent to the first waste liquid tank. Thereafter, when the sterilization is completed, the user is notified to discard the waste liquid, and the user discards the waste liquid. Since the sterilized waste liquid can also be discarded without stopping the operation with such a configuration, loss of the specimen during the measurement does not occur. It is not necessary for the user to feed the sterilizing agent, so that the burden on the user can be reduced.

### [Third Embodiment]

In the second embodiment, an example has been described in which when the waste liquid in the waste liquid tank is sterilized and can be discarded, the user is notified so as to prompt the user to discard the waste liquid. However, the user may not notice the notification, or even though the user notices the notification, the user cannot immediately start discarding of the waste liquid. In such a case, when the waste liquid in one of the waste liquid tanks reaches the warning water level and is not discarded and the waste liquid in the other waste liquid tank also reaches the warning water level, it is necessary to stop the operation because no more waste liquid can be accommodated.

Thus, in a third embodiment, a waste liquid discarding method for a case where the waste liquid tank 203b also reaches a warning water level when the waste liquid tank 203a reaches the warning water level and the waste liquid tank is switched to the waste liquid tank 203b will be described. Details will be described later, but in such a case, when the waste liquid tank 203b also reaches the warning water level, measurement of a limit time is performed, and when the waste liquid in the waste liquid tank 203a is not discarded within the limit time, the operation ends. When the waste liquid in the waste liquid tank 203a is discarded before the limit time is elapsed, the measurement of the limit time is reset and the waste liquid tank is switched from the waste liquid tank 203b to the waste liquid tank 203a. The limit time is a time for a user to discard the waste liquid in the waste liquid tank 203a, and is calculated based on an extra capacity of the waste liquid tank 203b.

### <Configuration of Waste Liquid System>

Since a configuration of the waste liquid system according to the present embodiment is the same as that of the waste liquid system 113 according to the second embodiment shown in FIG. 4, description thereof is omitted.

### <Waste Liquid Discarding Method>

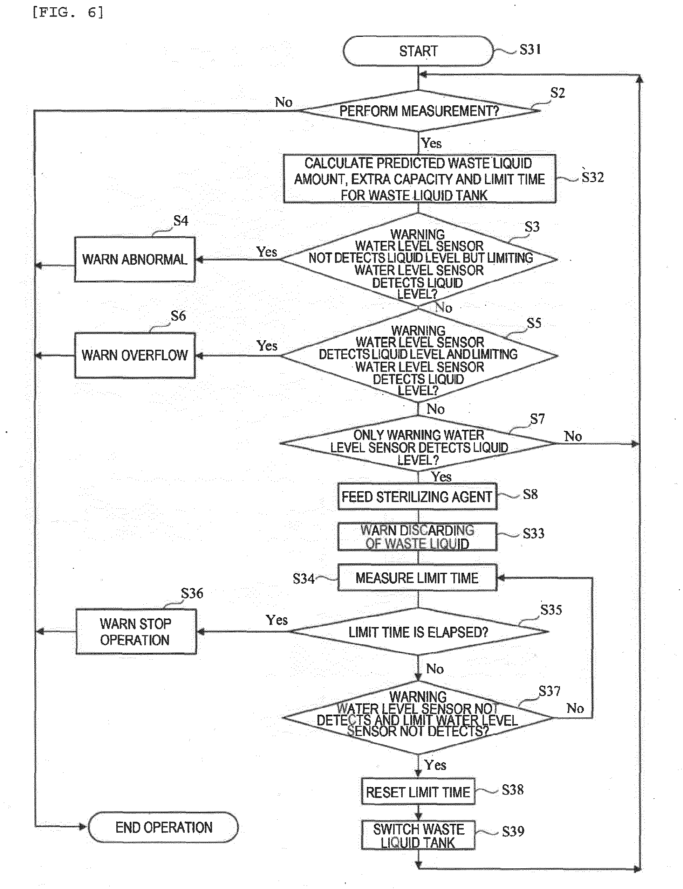

FIG. 6 is a flow chart showing a waste liquid discarding method according to the third embodiment. In FIG. 6, the same reference numerals are given to steps the same as those in the second embodiment (FIG. 5).

The waste liquid discarding method according to the present embodiment starts from a state in which the user does not discard the waste liquid from the waste liquid tank 203a in step S22 shown in FIG. 5 and the waste liquid tank is switched to the waste. liquid tank 203b in step S9 (step S31).

Steps S2 to S8 are the same as those in the second embodiment, but in the present embodiment, for example, step S32 is executed between steps S2 and S3.

In step S32, the computer 3 calculates a predicted waste liquid amount discharged into the waste liquid tank 203b, an extra capacity of the waste liquid tank 203b, and a limit time for discarding the waste liquid in the waste liquid tank 203a.

The predicted waste liquid amount is a value obtained by adding a current waste liquid amount in the waste liquid tank 203b and an amount of waste liquid per measurement. The current waste liquid amount is calculated by multiplying the number of specimen measurements with the amount of waste liquid per measurement. The amount of waste liquid per measurement is calculated by adding a supply aspiration amount design value, a dilution avoiding aspiration amount and a backlash equivalence amount, and is stored in a storage unit of the computer 3 in advance. The supply aspiration amount design value is a design value of an amount at which the specimen or reagent is aspirated and supplied to the measuring unit 112. The dilution avoiding aspiration amount is a design value of a specimen amount aspirated by a dummy in consideration of dilution at the time of dispensing the specimen. The backlash equivalence amount is a value of an error that occurs due to remaining of the specimen or reagent in a dispensing nozzle during dispensing.

The predicted waste liquid amount can also be an average waste liquid amount per unit time.

The extra capacity is a value indicating a waste liquid amount that can be discarded to the waste liquid tank 203b, which can be obtained based on a formula: extra capacity = (capacity at limiting water level L4 of waste liquid tank 203b) - (current waste liquid amount in waste liquid tank 203b).

The limit time is calculated based on a formula: limit time = extra capacity ÷ (the number of specimen measurements per unit time × amount of waste liquid per measurement) × safety factor. The number of specimen measurements per unit time can be obtained based on results of a previous operation or earlier operations. The safety factor is a value preset according to an automatic analyzer, and is set to, for example, from 0.8 to 1.2.

These calculated values are stored in the storage unit of the computer 3. Thus, in a case where power of the automatic analyzer 100 is turned off during the operation and the automatic analyzer100 is restarted, it is not necessary to perform step S32 again.

In step S7, the warning water level sensor 209b detects a liquid level, and it is determined that the waste liquid in the waste liquid tank 203b reaches the warning water level L3, in step S8, the sterilizing agent is introduced into the waste liquid tank 203b, and then the process proceeds to step S33. In step S33, the computer 3 confirms that the waste liquid in the waste liquid tank 203a is not discarded based on a detection signal of the warning water level sensor 209a, and causes the display unit 21 of the computer 2 to display a notification as a warning. Since the waste liquid in the waste liquid tank 203b also reaches the warning water level L3, a notification prompting the user to discard the waste liquid is displayed on the display unit 21.

Next, in step S34, the computer 3 starts measurement of the limit time calculated in step S32. The measurement of the limit time may be started immediately after the sterilizing agent is fed in step S8.

At this time, since the waste liquid in both the waste liquid tanks 203a and 203b reaches the warning water level, the computer 2 may suspend the operation of the automatic analyzer 100. Thus, it is possible to suspend the discharge of the waste liquid, secure time for discharging the waste liquid from the waste liquid tanks 203a and 203b, and prevent the waste liquid tanks 203a and 203b from overflowing. When the user discards the waste liquid in the waste liquid tank 203a and install the waste liquid tank 203a again in the waste liquid system 113, the computer 2 resumes the suspended operation.

In step S35, the computer 3 determines whether or not the limit time is elapsed. When the limit time is elapsed (Yes), the time is over. In step S36, the computer 2 displays a warning that the operation ends on the display unit 21, and ends the operation.

When the limit time is not elapsed (No), the process proceeds to step S37. The computer 3 determines whether or not the warning water level sensor 209a in the waste liquid tank 203a does not detect the liquid level and the limiting water level sensor 210a does not detect the liquid level either. Therefore, it possible to confirm whether or not the waste liquid in the waste liquid tank 203a is discarded by the user.

When neither the warning water level sensor 209a nor the limiting water level sensor 210a detects the liquid level (Yes), it can be determined that the waste liquid in the waste liquid tank 203a is discarded by the user, so that the measurement of the limit time is reset (suspended) in step S38. The calculation result of the limit time stored in the storage unit of the computer 3 is also reset.

In step S39, the computer 3 drives the electromagnetic valve 202 such that the flow path 201a is set to an open state and the flow path 201b is set to a closed state. Thus, the waste liquid tank is switched, and the waste liquid is discharged to the waste liquid tank 203a.

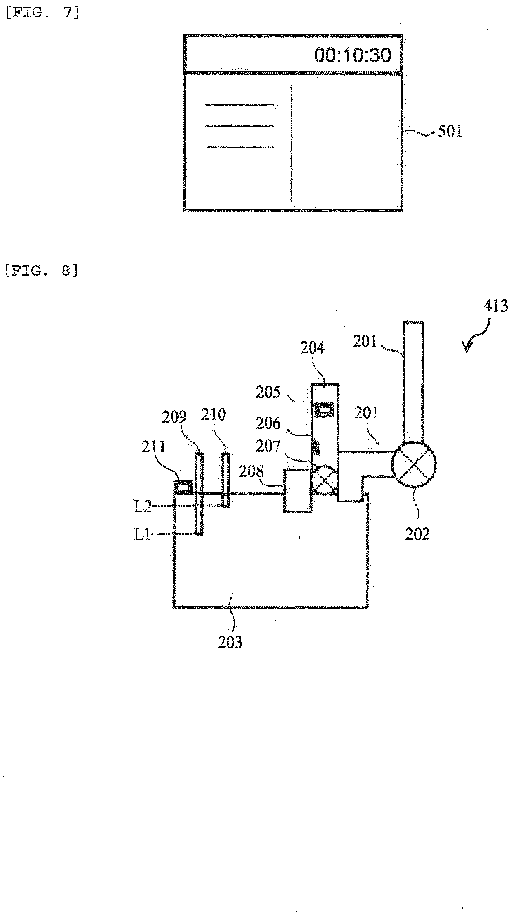

In step S34, at the same time with the start of the measurement of the limit time, the measurement of the limit time may be displayed on the display unit 21 of the computer 2. Thus, the user can know the timing when to discard the waste liquid in the waste liquid tank 203a. FIG. 7 is a schematic view showing an example of a screen 501 displaying a limit time. For example, a remaining time of the limit time is displayed on the screen 501.

### <Technical Effects>

As described above, in the third embodiment, when the user fails to discard the waste liquid from the first waste liquid tank and the waste liquid in the second waste liquid tank also reaches the warning water level, the warning is displayed and the limit time is measured. When the waste liquid in the first waste liquid tank is discarded by the user within the limit time, the waste liquid tank is switched to the first waste liquid tank and the measurement is continued. When the waste liquid in the first waste liquid tank is not discarded within the limit time, the operation ends. By adopting such a method, even in a case where the waste liquid is not discarded by the user, the user can be prompted to discard the waste liquid before both waste liquid tanks overflow. Further, in a case where the waste liquid is not discarded even when the user is warned, since the operation is stopped before both the waste liquid tanks overflow, the loss of the specimen can be prevented.

### [Fourth Embodiment]

In the second embodiment and the third embodiment, examples have been described in which the waste liquid system 113 includes two waste liquid tanks 203a and 203b and when the waste liquid in one waste liquid tank reaches the warning water level, the waste liquid tank is switched to the other waste liquid tank and the user is promoted to discard the waste liquid.

In the present embodiment, an example will be described in which a waste liquid system includes one waste liquid tank, and when a waste liquid in the waste liquid tank reaches a warning water level, a user is prompted to discard the waste liquid based on a predicted waste liquid amount.

### <Configuration of Waste Liquid System>

FIG. 8 is a schematic view showing a configuration of a waste liquid system 413 according to a fourth embodiment. In FIG. 8, the same components as those of the waste liquid system 113 (FIG. 4) of the second embodiment and the third embodiment are designated by the same reference numerals.

As shown in FIG. 8, the waste liquid system 413 according to the fourth embodiment includes a piping 201, an electromagnetic valve 202, a waste liquid tank 203, a feeding standby unit 204, an LED 205, a sensor 206, an electromagnetic valve 207, a feed unit 208, a warning water level sensor 209, a limiting water level sensor 210, and an LED 211. As described above, the waste liquid system 413 is different from the waste liquid systems 113 of the second embodiment and the third embodiment in that only components on one waste liquid tank side are provided. Therefore, duplicate description is omitted.

### <Waste Liquid Discarding Method>

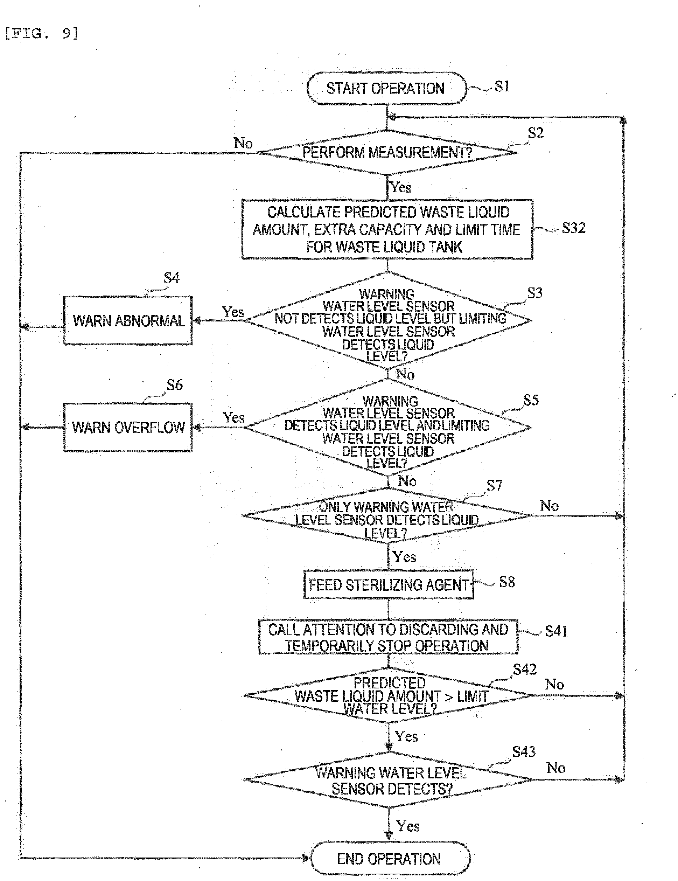

FIG. 9 is a flow chart showing a waste liquid discarding method according to the fourth embodiment. Since the waste liquid discarding method according to the present embodiment is almost the same as the method according to the third embodiment shown in FIG. 6, hereinafter, only differences from the waste liquid discarding method according to the third embodiment will be described. In FIG. 9, steps showing the same actions as those of the steps shown in FIG. 6 are designated by the same reference numerals.

In step S1, the user inputs an action start instruction with the input unit 22 to the computer 2. When receiving the action start instruction from the input unit 22, the computer 2 transmits the instruction to the computers 3 and 4. The computer 3 starts receiving inputs of a detection signal of the sensor 206, a detection signal of the warning water level sensor 209, and a detection signal of the limiting water level sensor 210.

Next, after steps S2, S32, and steps S3 to S8 are executed in the same manner as in the third embodiment, the process proceeds to step S41. At this time, the waste liquid in the waste liquid tank 203 reaches the warning water level L1.

In step S41, the computer 2 displays, in order to prompt the user to discard the waste liquid in the waste liquid tank 203, a notification on the display unit 21 (warning unit) and suspends the operation.

In step S42, the computer 3 determines whether or not a predicted waste liquid amount exceeds the limiting water level L2 (capacity of waste liquid tank 203) ("predicted waste liquid amount > limiting water level"?). That is, it is determined whether or not an extra capacity (= limiting water level L2 - warning water level L1) of the waste liquid tank 203 is less than an amount of waste liquid per measurement ("extra capacity = (limiting, water level L2 - warning water level L1) < amount of waste liquid per measurement"?).

As described in the third embodiment, the predicted waste liquid amount is calculated based on, for example, a value obtained by adding a current waste liquid amount in the waste liquid tank 203b and the amount of waste liquid per measurement. The extra capacity is a value indicating an amount of waste liquid that can be discarded to the waste liquid tank 203, and can be obtained based on a formula: extra capacity = (capacity at limiting water level L2 of waste liquid tank 203) - (current waste liquid amount in waste liquid tank 203).

In a case of No in step S42, since the waste liquid can be discharged to the waste liquid tank 203, the computer 2 resumes the operation and returns to step S2 and the measurement is continued.

In a case of Yes in step S42, the process proceeds to step S43. When the predicted waste liquid amount exceeds the limiting water level L2 and the waste liquid in the waste liquid tank 203 is not discarded, the waste liquid reaches the limiting water level L2 and overflows during the measurement operation, so that it is necessary to stop the operation. Therefore, in step S43, the computer 3 determines whether or not the warning water level sensor 209 detects the liquid level in order to confirm whether or not the waste liquid in the waste liquid tank 203 is discarded.

In a case of Yes in step S43, it is considered that the user does not discard the waste liquid in the waste liquid tank 203, and the operation ends. In a case of No in step S43, since it can be considered that the user discards the waste liquid in the waste liquid tank 203, the computer 2 resumes the operation and returns to step S2 and the measurement is continued.

By combining the present embodiment and the first embodiment, a facility piping 213 and an electromagnetic valve 212 (not shown in FIG. 8) may be provided in the waste liquid system 413 to automatically discard the waste liquid instead of discarding the waste liquid by the user. In this case, the computer 3 suspends the operation in response to feeding the sterilizing agent into the waste liquid tank 203, and when a prescribed time is elapsed, drives the electromagnetic valve 212 to discard the waste liquid via the facility piping.

### <Technical Effects>

As described above, in the fourth embodiment, when the waste liquid of the waste liquid tank 203 reaches the warning water level L1, the user is prompted to discard the waste liquid, and when the predicted waste liquid amount exceeds the limiting water level L2 (when the extra capacity is less than the amount of waste liquid per measurement), the operation ends if the warning water level sensor 209 detects the liquid level. In this way, the user is prompted to discard the waste liquid before the predicted waste liquid amount reaches the limiting water level L2 (capacity of waste liquid tank 203). Thus, since the user can discard the waste liquid in the waste liquid tank 203 before the operation is stopped, the loss of the specimen can be prevented. As in the first to third embodiments, since the feed unit 208 is provided to automatically feed the sterilizing agent when the waste liquid reaches the warning water level L1, it is not necessary for the user to manually feed the sterilizing agent, and the work load can be reduced.

### [Modification]

The present disclosure is not limited to the above-described embodiments, and includes various modifications. For example, the above-described embodiments have been described in detail in order to describe the present disclosure in an easy-to-understand manner, and each do not necessarily include all the configurations described above. In addition, a part of a certain embodiment can be replaced with a configuration of another embodiment. The configuration of another embodiment can also be added to the configuration of the certain embodiment. Further, a part of the configuration of another embodiment can also be added to, deleted from, or replaced with a part of configuration of each embodiment.

### Reference Sign List

100: Automatic analyzer
120: Core device
2 to 4: Computer
21: Display unit
22: Input unit
101: Specimen rack feed unit
102: Specimen rack recovery unit
103: Conveyance line
104: Buffer
105: Analysis unit
106: Reaction vessel accommodation unit
107: Reagent disk
108: Reaction disk
109: Reagent vessel
110: Reaction vessel
111: Reaction vessel holding unit
112: Measuring unit
113, 413: Waste liquid system
114: Specimen rack
115: Specimen vessel
116: Reagent dispensing probe
117: Specimen dispensing probe
118: Reaction liquid dispensing probe
201: Piping
202: Electromagnetic valve
203, 203a, 203b: Waste liquid tank
204, 204a, 204b: Feeding standby unit
205, 205a, 205b: LED
206, 206a, 206b: Sensor
207, 207a, 207b: Electromagnetic valve
208, 208a, 208b: Feed unit
209, 209a, 209b: Warning water level sensor
210, 210a, 210b: Limiting water level sensor
211, 211a, 211b: LED
212, 212a, 212b: Electromagnetic valve
213, 213a, 213b: Facility piping
501: Screen

## Claims

1. An automatic analyzer comprising:
a measuring unit (112) configured to perform measurement on a specimen;
a first waste liquid tank (203a) configured to accommodate a waste liquid discharged via a first flow path (201a) from the measuring unit (112);
a second waste liquid tank (203b) configured to accommodate a waste liquid discharged via a second flow path (201b) from the measuring unit (112);
an electromagnetic valve (202) disposed between the first flow path (201a) and the second flow path (201b), and configured to switch the flow paths so as to discharge the waste liquid to any one of the first waste liquid tank (203a) and the second waste liquid tank (203b);
a first feed unit (208a) configured to feed a sterilizing agent into the first waste liquid tank (203a);
a second feed unit (208b) configured to feed the sterilizing agent into the second waste liquid tank (203b);
a control unit configured to control at least the electromagnetic valve (202), the first feed unit (208a) and the second feed unit;
a first detection unit (209a) configured to detect that the waste liquid in the first waste liquid tank (203a) reaches the first prescribed amount, and output a detection signal to the control unit, and
a second detection unit (209b) configured to detect that the waste liquid in the second waste liquid tank (203b) reaches the second prescribed amount, and output a detection signal to the control unit, wherein
the control unit is configured to
drive the first feed unit (208a) to feed the sterilizing agent into the first waste liquid tank (203a) when the waste liquid in the first waste liquid tank (203a) reaches a first prescribed amount,
drive the electromagnetic valve (202) to switch the first flow path (201a) into a closed state and to switch the second flow path (201b) into an open state,
output a notification to urge a user to discard the waste liquid from the first waste liquid tank (203a) after an elapse of a first prescribed time since the sterilizing agent is fed into the first waste liquid tank (203a),
drive the second feed unit to feed the sterilizing agent into the second waste liquid tank (203b) when the waste liquid in the second waste liquid tank (203b) reaches a second prescribed amount,
output a notification to urge the user to discard the waste liquid from the second waste liquid tank (203b) after an elapse of a second prescribed time since the sterilizing agent is fed into the second waste liquid tank (203b),
output an alarm to the user and starts a measurement of a limit time when the user does not discard the waste liquid from the first waste liquid tank (203a) and the waste liquid in the second waste liquid tank (203b) reaches the second prescribed amount, and
stop the measurement in the measuring unit (112) when the waste liquid in the first waste liquid tank (203a) reaches the first prescribed amount even after an elapse of the limit time, wherein
the limit time is calculated by:
extra capacity of the second waste liquid tank (203b)/ (the number of specimen measurements per unit time × amount of waste liquid per measurement) × safety factor, wherein
the extra capacity of the second waste liquid tank (203b) is a difference between a maximum capacity of the second waste liquid tank (203b) and a current waste liquid amount in the second waste liquid tank (203b).

2. The automatic analyzer according to claim 1, further comprising:
a sterilizing agent holding unit (204a) configured to accommodate the sterilizing agent; and
a sensor configured to detect whether the sterilizing agent is accommodated in the sterilizing agent holding unit (204a) .

3. The automatic analyzer according to claim 1, further comprising:
a display unit (21), wherein
the control unit is configured to control the display unit (21) to display the limit time.

## Patentansprüche

1. Automatischer Analysator, umfassend:
eine Messeinheit (112), die konfiguriert ist, um eine Messung an einer Probe durchzuführen;
einen ersten Abfallflüssigkeitstank (203a), der konfiguriert ist, um eine Abfallflüssigkeit aufzunehmen, die über einen ersten Strömungsweg (201a) von der Messeinheit (112) abgegeben wird;
einen zweiten Abfallflüssigkeitstank (203b), der konfiguriert ist, um eine Abfallflüssigkeit aufzunehmen, die über einen zweiten Strömungsweg (201b) von der Messeinheit (112) abgegeben wird;
ein elektromagnetisches Ventil (202), das zwischen dem ersten Strömungsweg (201a) und dem zweiten Strömungsweg (201b) angeordnet ist und konfiguriert ist, um die Strömungswege zu schalten, um die Abfallflüssigkeit an einen von dem ersten Abfallflüssigkeitstank (203a) und dem zweiten Abfallflüssigkeitstank (203b) abzugeben;
eine erste Zuführeinheit (208a), die konfiguriert ist, um ein Sterilisationsmittel in den ersten Abfallflüssigkeitstank (203a) zuzuführen;
eine zweite Zuführeinheit (208b), die konfiguriert ist, um das Sterilisationsmittel in den zweiten Abfallflüssigkeitstank (203b) zuzuführen;
eine Steuereinheit, die konfiguriert ist, um mindestens das elektromagnetische Ventil (202), die erste Zuführeinheit (208a) und die zweite Zuführeinheit zu steuern;
eine erste Erfassungseinheit (209a), die konfiguriert ist, um zu erfassen, dass die Abfallflüssigkeit in dem ersten Abfallflüssigkeitstank (203a) die erste vorgeschriebene Menge erreicht, und ein Erfassungssignal an die Steuereinheit auszugeben, und
eine zweite Erfassungseinheit (209b), die konfiguriert ist, um zu erfassen, dass die Abfallflüssigkeit in dem zweiten Abfallflüssigkeitstank (203b) die zweite vorgeschriebene Menge erreicht, und ein Erfassungssignal an die Steuereinheit auszugeben, wobei
die Steuereinheit konfiguriert ist, um
die erste Zuführeinheit (208a) anzutreiben, um das Sterilisationsmittel in den ersten Abfallflüssigkeitstank (203a) zuzuführen, wenn die Abfallflüssigkeit in dem ersten Abfallflüssigkeitstank (203a) eine erste vorgeschriebene Menge erreicht,
das elektromagnetische Ventil (202) anzutreiben, um den ersten Strömungsweg (201a) in einen geschlossenen Zustand zu schalten und den zweiten Strömungsweg (201b) in einen offenen Zustand zu schalten,
eine Benachrichtigung auszugeben, um einen Benutzer aufzufordern, die Abfallflüssigkeit aus dem ersten Abfallflüssigkeitstank (203a) zu verwerfen, nachdem eine erste vorgeschriebene Zeit verstrichen ist, seitdem das Sterilisationsmittel in den ersten Abfallflüssigkeitstank (203a) zugeführt wurde,
die zweite Zuführeinheit anzutreiben, um das Sterilisationsmittel in den zweiten Abfallflüssigkeitstank (203b) zuzuführen, wenn die Abfallflüssigkeit in dem zweiten Abfallflüssigkeitstank (203b) eine zweite vorgeschriebene Menge erreicht,
eine Benachrichtigung auszugeben, um den Benutzer aufzufordern, die Abfallflüssigkeit aus dem zweiten Abfallflüssigkeitstank (203b) zu verwerfen, nachdem eine zweite vorgeschriebene Zeit verstrichen ist, seitdem das Sterilisationsmittel in den zweiten Abfallflüssigkeitstank (203b) zugeführt wurde,
einen Alarm an den Benutzer auszugeben und eine Messung einer Grenzzeit zu starten, wenn der Benutzer die Abfallflüssigkeit nicht aus dem ersten Abfallflüssigkeitstank (203a) verwirft und die Abfallflüssigkeit in dem zweiten Abfallflüssigkeitstank (203b) die zweite vorgeschriebene Menge erreicht, und
die Messung in der Messeinheit (112) zu stoppen, wenn die Abfallflüssigkeit in dem ersten Abfallflüssigkeitstank (203a) die erste vorgeschriebene Menge erreicht, selbst nachdem die Grenzzeit verstrichen ist, wobei
die Grenzzeit berechnet wird durch:
zusätzliche Kapazität des zweiten Abfallflüssigkeitstanks (203b)/(Anzahl der Probenmessungen pro Zeiteinheit x Menge der Abfallflüssigkeit pro Messung) x Sicherheitsfaktor, wobei
die zusätzliche Kapazität des zweiten Abfallflüssigkeitstanks (203b) eine Differenz zwischen einer maximalen Kapazität des zweiten Abfallflüssigkeitstanks (203b) und einer aktuellen Abfallflüssigkeitsmenge in dem zweiten Abfallflüssigkeitstank (203b) ist.

2. Automatischer Analysator nach Anspruch 1, ferner umfassend:
eine Sterilisationsmittelhalteeinheit (204a), die konfiguriert ist, um das Sterilisationsmittel aufzunehmen; und
einen Sensor, der konfiguriert ist, um zu erfassen, ob das Sterilisationsmittel in der Sterilisationsmittelhalteeinheit (204a) aufgenommen ist.

3. Automatischer Analysator nach Anspruch 1, ferner umfassend:
eine Anzeigeeinheit (21), wobei
die Steuereinheit konfiguriert ist, um die Anzeigeeinheit (21) zu steuern, um die Grenzzeit anzuzeigen.

## Revendications

1. Analyseur automatique comprenant :
une unité de mesure (112) configurée pour effectuer une mesure sur un spécimen ;
un premier réservoir de liquide résiduaire (203a) configuré pour recevoir un liquide résiduaire évacué par l'intermédiaire d'un premier trajet d'écoulement (201a) depuis l'unité de mesure (112) ;
un second réservoir de liquide résiduaire (203b) configuré pour recevoir un liquide résiduaire évacué par l'intermédiaire d'un second trajet d'écoulement (201b) depuis l'unité de mesure (112) ;
une soupape électromagnétique (202) disposée entre le premier trajet d'écoulement (201a) et le second trajet d'écoulement (201b), et configurée pour commuter les trajets d'écoulement de manière à évacuer le liquide résiduaire vers l'un quelconque du premier réservoir de liquide résiduaire (203a) et du second réservoir de liquide résiduaire (203b) ;
une première unité d'alimentation (208a) configurée pour alimenter un agent de stérilisation dans le premier réservoir de liquide résiduaire (203a) ;
une seconde unité d'alimentation (208b) configurée pour alimenter l'agent de stérilisation dans le second réservoir de liquide résiduaire (203b) ;
une unité de commande configurée pour commander au moins la soupape électromagnétique (202), la première unité d'alimentation (208a) et la seconde unité d'alimentation ;
une première unité de détection (209a) configurée pour détecter que le liquide résiduaire dans le premier réservoir de liquide résiduaire (203a) atteint la première quantité prescrite, et délivrer un signal de détection à l'unité de commande, et
une seconde unité de détection (209b) configurée pour détecter que le liquide résiduaire dans le second réservoir de liquide résiduaire (203b) atteint la seconde quantité prescrite, et délivrer un signal de détection à l'unité de commande, dans lequel
l'unité de commande est configurée pour
commander la première unité d'alimentation (208a) pour alimenter l'agent de stérilisation dans le premier réservoir de liquide résiduaire (203a) lorsque le liquide résiduaire dans le premier réservoir de liquide résiduaire (203a) atteint une première quantité prescrite,
commander la soupape électromagnétique (202) pour commuter le premier trajet d'écoulement (201a) dans un état fermé et pour commuter le second trajet d'écoulement (201b) dans un état ouvert,
délivrer une notification pour inciter un utilisateur à rejeter le liquide résiduaire du premier réservoir de liquide résiduaire (203a) après un écoulement d'un premier temps prescrit depuis que l'agent de stérilisation est alimenté dans le premier réservoir de liquide résiduaire (203a),
commander la seconde unité d'alimentation pour alimenter l'agent de stérilisation dans le second réservoir de liquide résiduaire (203b) lorsque le liquide résiduaire dans le second réservoir de liquide résiduaire (203b) atteint une seconde quantité prescrite,
délivrer une notification pour inciter l'utilisateur à rejeter le liquide résiduaire du second réservoir de liquide résiduaire (203b) après un écoulement d'un second temps prescrit depuis que l'agent de stérilisation est alimenté dans le second réservoir de liquide résiduaire (203b),
délivrer une alarme à l'utilisateur et démarrer une mesure d'un temps limite lorsque l'utilisateur ne rejette pas le liquide résiduaire du premier réservoir de liquide résiduaire (203a) et que le liquide résiduaire dans le second réservoir de liquide résiduaire (203b) atteint la seconde quantité prescrite, et
arrêter la mesure dans l'unité de mesure (112) lorsque le liquide résiduaire dans le premier réservoir de liquide résiduaire (203a) atteint la première quantité prescrite même après un écoulement du temps limite, dans lequel
le temps limite est calculé par :
capacité supplémentaire du second réservoir de liquide résiduaire (203b)/(le nombre de mesures de spécimen par unité de temps x quantité de liquide résiduaire par mesure) x facteur de sécurité, dans lequel
la capacité supplémentaire du second réservoir de liquide résiduaire (203b) est une différence entre une capacité maximale du second réservoir de liquide résiduaire (203b) et une quantité de liquide résiduaire actuelle dans le second réservoir de liquide résiduaire (203b).

2. Analyseur automatique selon la revendication 1, comprenant en outre :
une unité de maintien d'agent de stérilisation (204a) configurée pour recevoir l'agent de stérilisation ; et
un capteur configuré pour détecter si l'agent de stérilisation est reçu dans l'unité de maintien d'agent de stérilisation (204a).

3. Analyseur automatique selon la revendication 1, comprenant en outre :
une unité d'affichage (21), dans lequel
l'unité de commande est configurée pour commander l'unité d'affichage (21) pour afficher le temps limite.
